# EUROPEAN PATENT APPLICATION

(11) **EP 3 618 484 A1**
(43) Date of publication of application: **04.03.2020**
(21) Application number: 18791191.2
(22) Date of filing: 27.04.2018
(51) Int. Cl.: H04W 16/18, H04W 16/10

(54) **METHOD AND DEVICE FOR ADJUSTING DOWNTILT ANGLE OF ANTENNA**

(30) Priority: 28.04.2017 CN 201710295114
(71) Applicant: ZTE Corporation, Shenzhen, Guangdong 518057 (CN)
(72) Inventor: XIE, Meijuan, Shenzhen Guangdong 518057 (CN); ZHANG, Honglong, Shenzhen Guangdong 518057 (CN); CHENG, Bo, Shenzhen Guangdong 518057 (CN); CHEN, Guotai, Shenzhen Guangdong 518057 (CN)
(74) Representative: Petraz, Gilberto Luigi
(86) International application number: PCT/CN2018/084744
(87) International publication number: WO 2018/196834

(57) **Abstract**

Provided are a method and a device for adjusting a downtilt angle of an antenna. The method may include: querying a key performance indicator (KPI) of a target cell, the KPI including a valid radio resource control (RRC) connection number and a physical resource block(PRB) utilization rate; and adjusting a downtilt angle of an antenna of a base station corresponding to the target cell according to the KPI of the target cell.

## Description

### Field of the Invention

The present disclosure relates to the field of communication technologies, and in particular, to a method and a device for adjusting a downtilt angle of an antenna.

### Background of the Invention

With the development of communication technologies, cell coverage and optimization are increasingly valued by people in the communication field. The scope of cell coverage is directly related to coverage parameters of an antenna, such as azimuth and downtilt angles. A traditional way of optimizing cell coverage is to analyze and calculate coverage parameters of an antenna based on test data by engineers and input new coverage parameters of the antenna to an element management system (EMS) using man-machine commands. However, because users have different behaviors in different time periods, the number of users of different cells connected to radio resource control (RRC) is also different in different time periods. The optimization of cell coverage is thus not invariable, but should be timely adjusted based on user behaviors. The existing methods for adjusting a downtilt angle of an antenna not only cause large workload to engineers, but also have the problem of low optimization efficiency.

### Summary of the Invention

The following is a summary of subject matters detailed in this text. This summary is not intended to limit the protection scope of the claims.

Directed to problems that the existing methods for adjusting a downtilt angle of an antenna easily cause large workload to engineers and exhibit low optimization efficiency, embodiments of the present disclosure provide a method and a device for adjusting a downtilt angle of an antenna.

An embodiment of the present disclosure provides a method for adjusting a downtilt angle of an antenna. The method includes:
querying a key performance indicator (KPI) of a target cell, the KPI including a valid radio resource control (RRC) connection number and a physical resource block(PRB) utilization rate; and
adjusting a downtilt angle of an antenna of a base station corresponding to the target cell according to the KPI of the target cell.

An embodiment of the present disclosure further provides a device for adjusting a downtilt angle of an antenna. The device includes:
a first querying module, configured to query a key performance indicator (KPI) of a target cell, the KPI including a valid radio resource control (RRC) connection number and a physical resource block(PRB) utilization rate; and
a first adjusting module, configured to adjust a downtilt angle of an antenna of a base station corresponding to the target cell according to the KPI of the target cell.

An embodiment of the present disclosure further provides a computer storage medium. The computer storage medium stores thereon one or more programs executable by a computer. The one or more programs, when executed by the computer, cause the computer to execute the above described method for adjusting a downtilt angle of an antenna.

Embodiments of the present disclosure provide a method and a device for adjusting a downtilt angle of an antenna. The method includes:
querying a KPI of a target cell, the KPI including a valid RRC connection number and a PRB utilization rate; and adjusting a downtilt angle of an antenna of a base station corresponding to the target cell according to the KPI of the target cell. In this way, the downtilt angle of the antenna of the base station corresponding to the target cell can be adjusted in real time according to the KPI of the target cell, which can realize automatic optimization of the coverage scope of the target cell, and achieve the purpose of saving labor and improving optimization efficiency.

Other aspects of the present disclosure will be apparent upon reading and understanding the drawings and the detailed description.

### Brief Description of the Drawings

Fig. 1 is a schematic flowchart of a method for adjusting a downtilt angle of an antenna according to an embodiment of the present disclosure;
Fig. 2 is a schematic flowchart of another method for adjusting a downtilt angle of an antenna according to an embodiment of the present disclosure;
Fig. 3 is a schematic diagram showing a predefined mapping relationship between a KPI and a downtilt angle adjustment parameter according to an embodiment of the present disclosure;
Fig. 4 is a schematic flowchart of further another method for adjusting a downtilt angle of an antenna according to an embodiment of the present disclosure;
Fig. 5 is a schematic diagram showing a cell for coverage optimization test according to an embodiment of the present disclosure;
Fig. 6 is a schematic diagram showing a valid RRC connection number of a target cell and valid RRC connection numbers of neighboring cells before adjusting a downtilt angle according to an embodiment of the present disclosure;
Fig. 7 is a schematic diagram showing the valid RRC connection number of the target cell and the valid RRC connection numbers of the neighboring cells after adjusting the downtilt angle according to an embodiment of the present disclosure;
Fig. 8 is a schematic diagram showing a device for adjusting a downtilt angle of an antenna according to an embodiment of the present disclosure;
Fig. 9 is a schematic diagram showing another device for adjusting a downtilt angle of an antenna according to an embodiment of the present disclosure; and
Fig. 10 is a schematic diagram showing further another device for adjusting a downtilt angle of an antenna according to an embodiment of the present disclosure.

### Detailed Description of the Embodiments

A detailed description will be made below in conjunction with the accompanying drawings and specific embodiments.

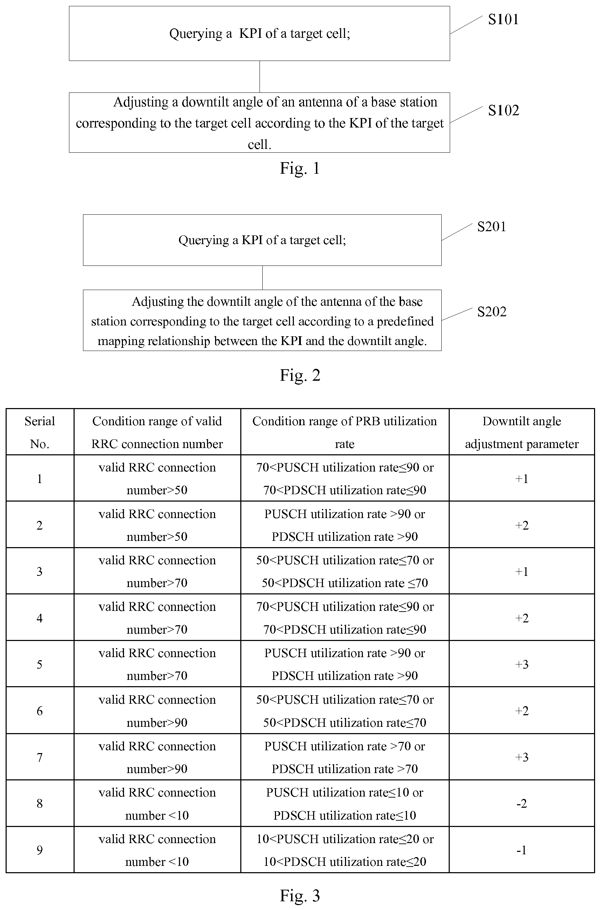

As shown in Fig. 1, an embodiment of the present disclosure provides a method for adjusting a downtilt angle of an antenna. The method includes the following steps.

In step S101, a key performance indicator (KPI) of a target cell is queried. The KPI includes a valid radio resource control (RRC) connection number and a physical resource block (PRB) utilization rate.

The target cell may be a cell with heavy telephone traffic or relatively light telephone traffic, and is usually a cell for which a downtilt angle of an antenna needs to be adjusted to optimize coverage scope. In this embodiment, the KPI includes the valid RRC connection number and the PRB utilization rate. The PRB utilization rate includes physical uplink shared channel (PUSCH) utilization rate and physical downlink shared channel (PDSCH) utilization rate. The KPI reflects coverage status and load condition of the target cell. The querying of the KPI of the target cell may be querying of the KPI of the target cell on an element management system (EMS) after logging in to the EMS. The purpose of querying the KPI of the target cell is to learn the coverage status and load condition of the target cell to determine whether it is necessary to optimize the coverage scope of the target cell.

In step S102, a downtilt angle of an antenna of a base station corresponding to the target cell is adjusted according to the KPI of the target cell.

The downtilt angle of the antenna is an important parameter for adjusting the coverage scope of the antenna in the base station. The larger the downtilt angle is, the smaller the coverage scope of the antenna is. Conversely, the smaller the downtilt angle is, the larger the coverage scope of the antenna is. In this step, after the KPI of the target cell is obtained, it is determined, according to the coverage status and the load condition of the target cell, whether it is necessary to optimize the coverage scope of the target cell. If it is necessary to optimize the coverage scope of the target cell, then the downtilt angle of the antenna of the base station corresponding to the target cell is adjusted accordingly. For example, when the telephone traffic of the target cell is heavy, the downtilt angle of the antenna of the base station corresponding to the target cell may be increased by 1 degree or 2 degrees to reduce the coverage scope of the target cell to thereby reduce the valid RRC connection number of the target cell. When the telephone traffic of the target cell is relatively light, the downtilt angle of the antenna of the base station corresponding to the target cell may be reduced by 1 degree or 2 degrees to expand the coverage scope of the target cell, to thereby increase the valid RRC connection number of the target cell.

In this embodiment, the KPI of the target cell is queried, the KPI including the valid RRC connection number and the PRB utilization rate; and the downtilt angle of the antenna of the base station corresponding to the target cell is adjusted according to the KPI of the target cell. In this way, the downtilt angle of the antenna of the base station corresponding to the target cell can be adjusted in real time according to the KPI of the target cell, which can realize automatic optimization of the coverage scope of the target cell, and achieve the purpose of saving labor and improving optimization efficiency.

As shown in Fig. 2, an embodiment of the present disclosure provides another method for adjusting a downtilt angle of an antenna. This embodiment, on the basis of the embodiment shown in Fig. 1, refines the step of adjusting the downtilt angle of the antenna of the base station corresponding to the target cell according to the KPI of the target cell. The method includes the following steps.

In step S201, a KPI of the target cell is queried. The KPI includes a valid RRC connection number and a PRB utilization rate.

For specific implementation of stepS201, please refer to the implementation of step S101 in the method embodiment shown in Fig. 1. To avoid repetition, details are not described herein again.

In step S202, the downtilt angle of the antenna of the base station corresponding to the target cell is adjusted according to a predefined mapping relationship between the KPI and the downtilt angle.

In this embodiment, the mapping relationship between the KPI and the downtilt angle may be predefined. In the mapping relationship, different KPI ranges correspond to different downtilt angle adjustment degrees. In this step, the adjusting of the downtilt angle of the antenna of the base station corresponding to the target cell according to the predefined mapping relationship between the KPI and the downtilt angle may be performed in a way of acquiring the mapping relationship first, querying the mapping relationship for a target KPI range to which the KPI of the target cell belongs, then determining a target downtilt angle adjustment parameter corresponding to the target KPI range, and then adjusting the downtilt angle of the antenna of the base station corresponding to the target cell according to the target downtilt angle adjustment parameter. For example, if the valid RRC connection number of the target cell is 60, and the PRB utilization rate thereof is 80, then a target KPI range to be queried in the mapping relationship and to which the KPI of the target cell belongs should be: valid RRC connection number ≥50, and 90≥PRB utilization rate>70, and the downtilt adjustment degree corresponding to the target KPI range should be +1 degree; in this case, the downtilt angle of the antenna of the base station corresponding to the target cell should be increased by 1 degree. In this way, when it is detected that the KPI of the target cell is within the KPI range of the downtilt angle parameter to be adjusted in the mapping relationship, the downtilt angle of the antenna of the base station corresponding to the target cell is immediately adjusted according to the mapping relationship, to thereby realize automatic optimization of the coverage scope of the target cell.

In this embodiment, the mapping relationship may include a plurality of condition ranges of the valid RRC connection number and the PRB utilization rate, and corresponding downtilt angle adjustment parameters.

The step of adjusting the downtilt angle of the antenna of the base station corresponding to the target cell according to the predefined mapping relationship between the KPI and the downtilt angle includes:
adjusting, when the valid RRC connection number and the PRB utilization rate of the target cell are both within the target condition range in the mapping relationship, the downtilt angle of the antenna of the base station corresponding to the target cell according to a downtilt angle adjustment parameter corresponding to the target condition range, the target condition range being any one of the condition ranges in the mapping relationship.

The foregoing mapping relationship includes a plurality of condition ranges of the valid RRC connection number and the PRB utilization rate; one range of the valid RRC connection number and the PRB utilization rate corresponds to one downtilt angle adjustment parameter. For example, the mapping relationship may be as shown in Fig.3. The mapping relationship includes nine condition ranges of the valid RRC connection number and the PRB utilization rate, and corresponding downtilt angle adjustment degrees; the PRB utilization rate may be classified into PUSCH utilization rate and PDSCH utilization rate. As indicated by the serial number 1, a KPI condition range with valid RRC connection number ≥50, and 90≥PUSCH utilization rate or PDSCH utilization rate >70corresponds to the downtilt angle adjustment parameter which is 1 degree.

In this step, it is first determined whether the valid RRC connection number and the PRB utilization rate of the target cell are both within a certain condition range in the mapping relationship. If the valid RRC connection number and the PRB utilization rate of the target cell are both within a certain condition range in the mapping relationship, i.e., the condition rage is the target condition range, then the downtilt angle of the antenna of the base station corresponding to the target cell is adjusted according to the downtilt angle adjustment parameter corresponding to the target condition range. For example, when the valid RRC connection number and the PRB utilization rate of the target cell are both within the condition range indicated by the serial number 1 in Fig. 3, the downtilt angle of the antenna of the base station corresponding to the target cell is increased by 1 degree to reduce the coverage scope of the target cell, to thereby release the valid RRC connection number of the target cell.

In this embodiment, after the querying of the KPI of the target cell, and before the adjusting of the downtilt angle of the antenna of the base station corresponding to the target cell according to the KPI of the target cell, the method may further include:
querying KPIs of all neighboring cells;
calculating an average value of a sum of valid RRC connection numbers of all the neighboring cells;
determining whether an absolute value of a difference between the valid RRC connection number of the target cell and the average value exceeds a preset value; and
performing the step of adjusting the downtilt angle of the antenna of the base station corresponding to the target cell according to the KPI of the target cell, if the absolute value exceeds the preset value.

The neighboring cells are cells that have a handover relationship with the target cell. In this step, the KPIs of all cells that have a handover relationship with the target cell are queried, so that the average value of the sum of the valid RRC connection numbers of all the neighboring cells is calculated. The preset value may be set in advance. The absolute value of the difference between the valid RRC connection number of the target cell and the average value exceeding the preset value to some degree reflects that the difference between the valid RRC connection number of the target cell and the valid RRC connection numbers of the neighboring cells is relatively big; in this case, it is necessary to adjust the downtilt angle of the antenna corresponding to the target cell. For example, if the preset value is set to be 50 in advance, when the absolute value of the difference between the valid RRC connection number of the target cell and the average value exceeds 50, the downtilt angle of the antenna of the base station corresponding to the target cell is adjusted according to the KPI of the target cell. When the absolute value of the difference between the valid RRC connection number of the target cell and the average value is less than the preset value, it is indicated that the difference between the valid RRC connection number of the target cell and the valid RRC connection numbers of the neighboring cells is not big; in this case, the downtilt angle of the antenna of the base station corresponding to the target cell may not be adjusted.

In this embodiment, after the querying of the KPI of the target cell, and before the adjusting of the downtilt angle of the antenna of the base station corresponding to the target cell according to the KPI of the target cell, the method may further include:
querying KPIs of all neighboring cells;
calculating a variance of the valid RRC connection number of the target cell and valid RRC connection numbers of all the neighboring cells;
determining whether the variance of the valid RRC connection number of the target cell and the valid RRC connection numbers of all the neighboring cells exceeds a preset variance; and
performing the step of adjusting the downtilt angle of the antenna of the base station corresponding to the target cell according to the KPI of the target cell, if the variance exceeds the preset variance.

In this step, after the querying of the KPIs of all the neighboring cells, it is necessary to calculate an average value of a sum of the valid RRC connection number of the target cell and the valid RRC connection numbers of all the neighboring cells, so as to calculate a variance of the valid RRC connection number of the target cell based on the average value. The variance can be used to measure a difference between the valid RRC connection number of the target cell and the average value. The greater the variance is, the greater the difference is between the valid RRC connection number of the target cell and the valid RRC connection numbers of the neighboring cells; the smaller the variance is, the closer the valid RRC connection number of the target cell and the valid RRC connection numbers of neighboring cells are. The preset variance may be set in advance, and only when the variance of the valid RRC connection number of the target cell exceeds the preset variance, is the downtilt angle of the antenna of the base station corresponding to the target cell is adjusted according to the KPI of the target cell.

This embodiment provides various exemplary implementations to the embodiment shown in Fig. 1. These exemplary implementations can be implemented in combination with one another, or can be implemented separately, and all of them can help to save labor and improve optimization efficiency.

The implementations introduced in the foregoing embodiments are exemplified below by way of examples.

### Example 1:

The method is implemented by using a script. First, log into the EMS is performed, i.e., a connection request is sent to the EMS. The EMS includes a performance module and a configuration module. The EMS needs to perform a verification request through a socket port. After the verification is passed, a connection response returned by the EMS is received, indicating that a network communication connection is established with the EMS.

After the login to the EMS is successful, a KPI query command is sent to the performance module of the EMS to query a KPI of a target cell; the performance module uploads a KPI file of the target cell to an FTP server, and returns a FTP message to the EMS, to inform the EMS that the KPI file of the target cell is ready. At this time, an FTP request is again sent to the EMS, for downloading the KPI file of the target cell; the EMS forwards the FTP request to the FTP server; and after passing the verification, the FTP server returns the KPI file of the target cell to the EMS.

After the KPI file of the target cell is downloaded, the KPI file of the target cell is parsed to obtain a valid RRC connection number and a PRB utilization rate of the target cell. When it is determined that it is necessary to adjust a downtilt angle of an antenna corresponding to the target cell, a request for querying an antenna device corresponding to the target cell is sent to the configuration module of the EMS; and then the configuration module returns the queried antenna device corresponding to the target cell to the EMS.

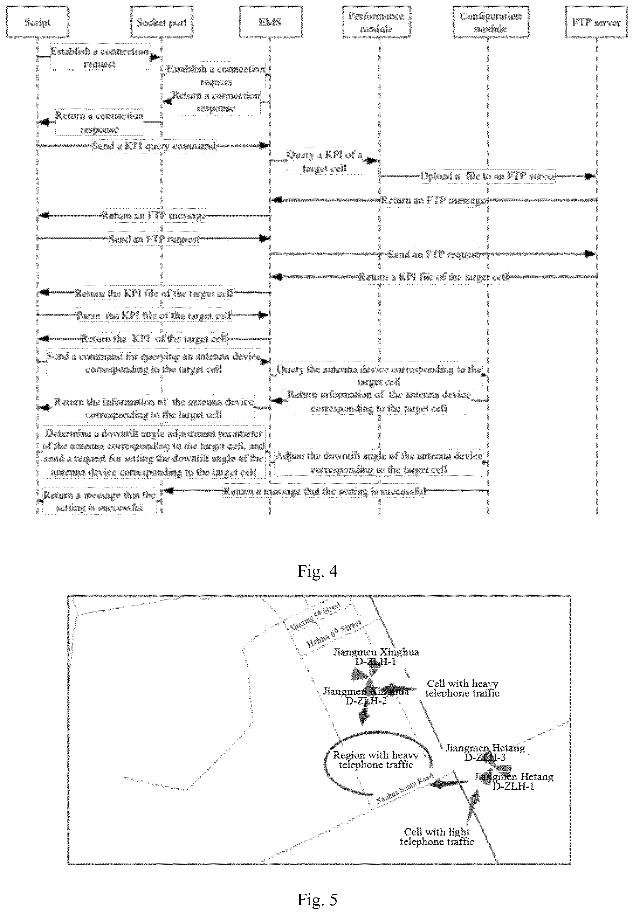

After the antenna device corresponding to the target cell is queried, a downtilt angle adjustment parameter of the antenna device corresponding to the target cell is determined according to the KPI of the target cell. Finally, a request for setting the downtilt angle of the antenna device is sent to the configuration module of the EMS; the configuration module adjusts the downtilt angle of the antenna device corresponding to the target cell according to the request for setting the downtilt angle of the antenna device, and then returns a message that the setting is successful to the EMS. At this point, the entire process of adjusting the downtilt angle of the antenna device corresponding to the target cell is completed. See Fig. 4 for the specific process.

In the following a coverage optimization test is performed on the cell shown in Fig. 5 in accordance with the implementation in Example 1. As shown in Fig. 5, the Jiangmen Xinghua D-ZLH-2 cell is a cell with heavy telephone traffic and is also the target cell of the test; the Jiangmen Hetang D-ZLH-1 cell and the Jiangmen Hetang D-ZLH-3 cell are cells with light telephone traffic and are also neighboring cells of the test.

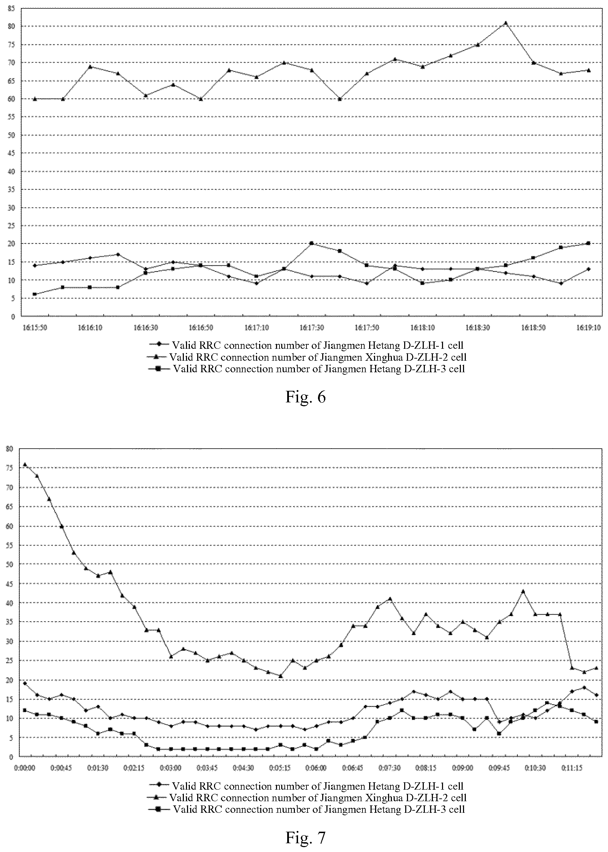

Before adjusting the downtilt angle of the antenna corresponding to the target cell, statistics of valid RRC connection numbers of the Jiangmen Xinghua D-ZLH-2 cell, the Jiangmen Hetang D-ZLH-1 cell and the Jiangmen Hetang D-ZLH-3 cell are shown in Fig. 6.It can be seen that the valid RRC connection number of the Jiangmen Xinghua D-ZLH-2 cell is relatively high, floating between 60 and 80, while the valid RRC connection number of the Jiangmen Hetang D-ZLH-1 cell is relatively low, floating between 8 and 16, and the valid RRC connection number of the Jiangmen Hetang D-ZLH-3 cell is also relatively low, floating between 5 and 20.Therefore, it is necessary to optimize the coverage scope of the Jiangmen Xinghua D-ZLH-2 cell.

After adjusting the downtilt angle of the antenna corresponding to the target cell, statistics of valid RRC connection numbers of the Jiangmen Xinghua D-ZLH-2 cell, the Jiangmen Hetang D-ZLH-1 cell and the Jiangmen Hetang D-ZLH-3 cell are shown in Fig. 7.After the adjustment, the valid RRC connection number of the Jiangmen Xinghua D-ZLH-2 cell drops to about 35, while the valid RRC connection number of the Jiangmen Hetang D-ZLH-1 cell increases to about 20, and the valid RRC connection number of the Jiangmen Hetang D-ZLH-3 cell increases to about 12.

It can be seen that, by adjusting the downtilt angle of the antenna corresponding to the target cell according to the KPI parameter of the target cell, the coverage scope of the target cell can be effectively optimized, which can achieve a dynamic balance between the RRC connection number of the target cell and the RRC connection number of each of the neighboring cells.

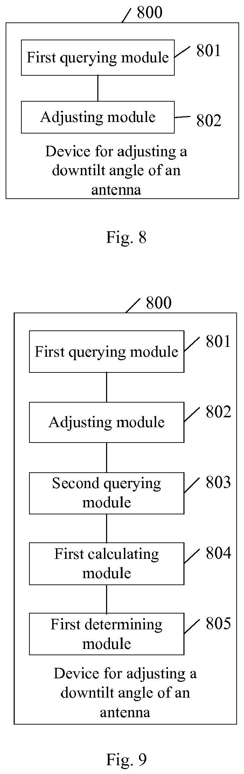

As shown in Fig. 8, an embodiment of the present disclosure provides a device for adjusting a downtilt angle of an antenna. The device includes:
a first querying module 801, configured to query a KPI of a target cell, the KPI including a valid RRC connection number and a PRB utilization rate; and
an adjusting module 802, configured to adjust a downtilt angle of an antenna of a base station corresponding to the target cell according to the KPI of the target cell.

In this embodiment, the adjusting module 802 may be configured to adjust the downtilt angle of the antenna of the base station corresponding to the target cell according to a predefined mapping relationship between the KPI and the downtilt angle.

In this embodiment, the mapping relationship may include a plurality of condition ranges of the valid RRC connection number and the PRB utilization rate, and corresponding downtilt angle adjustment parameters.

The adjusting module 802 is configured to, when the valid RRC connection number and the PRB utilization rate of the target cell are both within a target condition range in the mapping relationship, adjust the downtilt angle of the antenna of the base station corresponding to the target cell according to a downtilt angle adjustment parameter corresponding to the target condition range. The target condition range is any one of the condition ranges in the mapping relationship.

In this embodiment, as shown in Fig. 9, the device 800 may further include:
a second querying module 803, configured to query KPIs of all neighboring cells;
a first calculating module 804, configured to calculate an average value of a sum of a valid RRC connection number of the target cell and valid RRC connection numbers of all the neighboring cells; and
a first determining module 805, configured to determine whether an absolute value of a difference between the valid RRC connection number of the target cell and the average value exceeds a preset value;
wherein the adjusting module 802 is configured to adjust the downtilt angle of the antenna of the base station corresponding to the target cell according to the KPI of the target cell, if the absolute value exceeds the preset value.

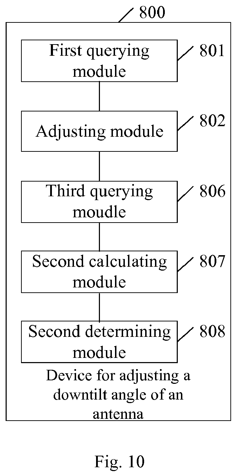

In this embodiment, as shown in Fig. 10, the device 800 may further include:
a third querying module 806, configured to query KPIs of all neighboring cells;
a second calculating module 807, configured to calculate an average value of a sum of a valid RRC connection number of the target cell and valid RRC connection numbers of all the neighboring cells, and a variance of the valid RRC connection number of the target cell; and
a second determining module 808, configured to determine whether the variance of the valid RRC connection number of the target cell exceeds a preset variance;
wherein the adjusting module 802 is configured to adjust the downtilt angle of the antenna of the base station corresponding to the target cell according to the KPI of the target cell, if the variance exceeds the preset variance.

The device 800 for adjusting a downtilt angle of an antenna can implement various processes of the method embodiments shown in Fig. 1 to Fig. 2, and can achieve the same beneficial effects. To avoid repetition, details are not described herein again.

It will be appreciated by those of ordinary skill in the art that all or some of the steps of the methods provided in the above embodiments may be performed by hardware associated with programs and instructions. The programs may be stored in a computer-readable medium, and executing of the programs includes the following steps of:
querying a KPI of a target cell, the KPI including a valid RRC connection number and a PRB utilization rate; and
adjusting a downtilt angle of an antenna of a base station corresponding to the target cell according to the KPI of the target cell.

In this embodiment, the step of adjusting the downtilt angle of the antenna of the base station corresponding to the target cell according to the KPI of the target cell may include:
adjusting the downtilt angle of the antenna of the base station corresponding to the target cell according to a predefined mapping relationship between the KPI and the downtilt angle.

In this embodiment, the mapping relationship may include a plurality of condition ranges of the valid RRC connection number and the PRB utilization rate, and corresponding downtilt angle adjustment parameters.

The step of adjusting the downtilt angle of the antenna of the base station corresponding to the target cell according to the predefined mapping relationship between the KPI and the downtilt angle includes:
adjusting, when the valid RRC connection number and the PRB utilization rate of the target cell are both within a target condition range in the mapping relationship, the downtilt angle of the antenna of the base station corresponding to the target cell according to a downtilt angle adjustment parameter corresponding to the target condition range, the target condition range being any one of the condition ranges in the mapping relationship.

In this embodiment, after the querying of the KPI of the target cell, and before the adjusting of the downtilt angle of the antenna of the base station corresponding to the target cell according to the KPI of the target cell, the method may further include:
querying KPIs of all neighboring cells;
calculating an average value of a sum of valid RRC connection numbers of all the neighboring cells;
determining whether an absolute value of a difference between the valid RRC connection number of the target cell and the average value exceeds a preset value; and
performing the step of adjusting the downtilt angle of the antenna of the base station corresponding to the target cell according to the KPI of the target cell if the absolute value exceeds the preset value.

In this embodiment, after the querying of the KPI of the target cell, and before the adjusting of the downtilt angle of the antenna of the base station corresponding to the target cell according to the KPI of the target cell, the method may further include:
querying KPIs of all neighboring cells;
calculating a variance of the valid RRC connection number of the target cell and valid RRC connection numbers of all the neighboring cells;
determining whether the variance of the valid RRC connection number of the target cell and the valid RRC connection numbers of all the neighboring cells exceeds a preset variance; and
performing the step of adjusting the downtilt angle of the antenna of the base station corresponding to the target cell according to the KPI of the target cell if the variance exceeds the preset variance.

Those of ordinary skill in the art shall appreciate that all or some of the steps of the methods disclosed above, and the functional modules/units of the systems and devices disclosed above, may be implemented as software, firmware, hardware, and any suitable combinations thereof. In hardware implementations, the division between functional modules/units referred to in the above description does not necessarily correspond to the division between physical components. For example, one physical component may have multiple functions, or one function or step may be executed by a combination of a plurality of physical components. Some or all of the components may be implemented as software executed by a processor, such as a digital signal processor or a microprocessor, or be implemented as hardware, or as an integrated circuit, such as an application-specific integrated circuit. Such software may be distributed on a computer-readable medium which may include computer storage medium (or non-transitory medium) and communication medium (or transitory medium). As known by those of ordinary skill in the art, the term computer storage medium includes volatile and nonvolatile, removable and non-removable medium implemented in any method or technology for storage of information (such as computer-readable instructions, data structures, program modules, or other data). Computer storage medium includes, but is not limited to, random access memory (RAM), read only memory (ROM), electrically erasable programmable read-only memory (EEPROM), flash memory or other memory technologies, compact disc read-only memory (CD-ROM), digital versatile disk (DVD) or other optical disk storages, magnetic cassettes, magnetic tapes, magnetic disk storages or other magnetic storages, or any other medium that can be used to store desired information and can be accessed by a computer. In addition, it is known to those of ordinary skill in the art that, communication medium typically contains computer-readable instructions, data structures, program modules or other data in a modulated data signal such as a carrier wave or other transport mechanism, and may include any information delivery medium.

Described above are exemplary embodiments of the present disclosure. It shall be noted that for those of ordinary skill in the art, various improvements and modifications may be made to the present disclosure without departing from the principles of the present disclosure, and all such improvements and modifications shall be considered as falling within the protection scope of the present disclosure.

### Industrial applicability

Embodiments of the present disclosure provide a method and a device for adjusting a downtilt angle of an antenna. The method includes: querying a KPI of a target cell, the KPI including a valid RRC connection number and a PRB utilization rate; and adjusting a downtilt angle of an antenna of a base station corresponding to the target cell according to the KPI of the target cell. In this way, the downtilt angle of the antenna of the base station corresponding to the target cell can be adjusted in real time according to the KPI of the target cell, which can realize automatic optimization of the coverage scope of the target cell, and achieve the purpose of saving labor and improving optimization efficiency.

## Claims

1. A method for adjusting a downtilt angle of an antenna, including:
querying a key performance indicator KPI of a target cell, wherein the KPI includes a valid radio resource control RRC connection number and a physical resource block PRB utilization rate; and
adjusting a downtilt angle of an antenna of a base station corresponding to the target cell according to the KPI of the target cell.

2. The method according to claim 1, wherein the adjusting of the downtilt angle of the antenna of the base station corresponding to the target cell according to the KPI of the target cell includes:
adjusting the downtilt angle of the antenna of the base station corresponding to the target cell according to a predefined mapping relationship between the KPI and the downtilt angle.

3. The method according to claim 2, wherein the mapping relationship includes a plurality of condition ranges of the valid RRC connection number and the PRB utilization rate, and corresponding downtilt angle adjustment parameters; and
the adjusting of the downtilt angle of the antenna of the base station corresponding to the target cell according to the predefined mapping relationship between the KPI and the downtilt angle includes:
adjusting, when the valid RRC connection number and the PRB utilization rate of the target cell are both within a target condition range in the mapping relationship, the downtilt angle of the antenna of the base station corresponding to the target cell according to a downtilt angle adjustment parameter corresponding to the target condition range, wherein the target condition range is any one of the condition ranges in the mapping relationship.

4. The method according to any one of claims 1 to 3, wherein after the querying of the KPI of the target cell, and before the adjusting of the downtilt angle of the antenna of the base station corresponding to the target cell according to the KPI of the target cell, the method further includes:
querying KPIs of all neighboring cells;
calculating an average value of a sum of valid RRC connection numbers of all the neighboring cells;
determining whether an absolute value of a difference between the valid RRC connection number of the target cell and the average value exceeds a preset value; and
performing the adjusting of the downtilt angle of the antenna of the base station corresponding to the target cell according to the KPI of the target cell, if the absolute value exceeds the preset value.

5. The method according to any one of claims 1 to 3, wherein after the querying of the KPI of the target cell, and before the adjusting of the downtilt angle of the antenna of the base station corresponding to the target cell according to the KPI of the target cell, the method further includes:
querying KPIs of all neighboring cells;
calculating a variance of the valid RRC connection number of the target cell and valid RRC connection numbers of all the neighboring cells;
determining whether the variance of the valid RRC connection number of the target cell and the valid RRC connection numbers of all the neighboring cells exceeds a preset variance; and
performing the adjusting of the downtilt angle of the antenna of the base station corresponding to the target cell according to the KPI of the target cell, if the variance exceeds the preset variance.

6. A device for adjusting a downtilt angle of an antenna, including:
a first querying module, configured to query a key performance indicator KPI of a target cell, wherein the KPI includes a valid radio resource control RRC connection number and a physical resource block PRB utilization rate; and
an adjusting module, configured to adjust a downtilt angle of an antenna of a base station corresponding to the target cell according to the KPI of the target cell.

7. The device according to claim 6, wherein the adjusting module is configured to adjust the downtilt angle of the antenna of the base station corresponding to the target cell according to a predefined mapping relationship between the KPI and the downtilt angle.

8. The device according to claim 7, wherein the mapping relationship includes a plurality of condition ranges of the valid RRC connection number and the PRB utilization rate, and corresponding downtilt angle adjustment parameters; and
the adjusting module is configured to, when the valid RRC connection number and the PRB utilization rate of the target cell are both within a target condition range in the mapping relationship, adjust the downtilt angle of the antenna of the base station corresponding to the target cell according to a downtilt angle adjustment parameter corresponding to the target condition range, wherein the target condition range is any one of the condition ranges in the mapping relationship.

9. The device according to any one of claims 6 to 8, further including:
a second querying module, configured to query KPIs of all neighboring cells;
a first calculating module, configured to calculate an average value of a sum of valid RRC connection numbers of all the neighboring cells; and
a first determining module, configured to determine whether an absolute value of a difference between the valid RRC connection number of the target cell and the average value exceeds a preset value;
wherein the adjusting module is configured to perform the adjusting of the downtilt angle of the antenna of the base station corresponding to the target cell according to the KPI of the target cell, if the absolute value exceeds the preset value.

10. The device according to any one of claims 6 to 8, further including:
a third querying module, configured to query KPIs of all neighboring cells;
a second calculating module, configured to calculate a variance of the valid RRC connection number of the target cell and valid RRC connection numbers of all the neighboring cells; and
a second determining module, configured to determine whether the variance of the valid RRC connection number of the target cell and the valid RRC connection numbers of all the neighboring cells exceeds a preset variance;
wherein the adjusting module is configured to perform the adjusting of the downtilt angle of the antenna of the base station corresponding to the target cell according to the KPI of the target cell, if the variance exceeds the preset variance.

11. A computer-readable storage medium storing thereon computer-executable instructions, wherein the computer-executable instructions, when executed by a processor, implement the method according to any one of claims 1 to 5.
